# EUROPÄISCHE PATENTSCHRIFT

(11) **EP 1 771 310 B1**
(45) Veröffentlichungstag und Bekanntmachung des Hinweises auf die Patenterteilung: **09.12.2009**
(21) Anmeldenummer: 05763446.1
(22) Anmeldetag: 13.07.2005
(51) Int. Cl.: B60G 13/00, F16F 9/54

(54) **ZYLINDERBAUGRUPPE MIT EINEM ACHSANSCHLUSS**
CYLINDER MODULE WITH AN AXLE CONNECTION
MODULE CYLINDRIQUE POURVU D'UN RACCORD D'ESSIEU

(30) Priorität: 24.07.2004 DE 102004036090
(43) Veröffentlichungstag der Anmeldung: 11.04.2007
(73) Patentinhaber: ZF Friedrichshafen AG, 88046 Friedrichshafen (DE)
(72) Erfinder: DEIGNER, Bruno, 97464 Niederwerrn (DE); KRAUS, Steffen, 97424 Schweinfurt (DE); FREIMUTH, Christian, 97084 Würzburg (DE)
(86) Internationale Anmeldenummer: PCT/EP2005/007587
(87) Internationale Veröffentlichungsnummer: WO 2006/010476

(56) Entgegenhaltungen:
- EP-A- 0 476 833
- DE-A1- 3 932 329
- DE-C1- 19 647 411
- US-A- 3 893 702
- US-A- 3 917 308
- US-A- 4 223 903
- US-A- 5 180 129
- PATENT ABSTRACTS OF JAPAN Bd. 1999, Nr. 14, 22. Dezember 1999 (1999-12-22) & JP 11 257411 A (UNISIA JECS CORP), 21. September 1999 (1999-09-21)
- PATENT ABSTRACTS OF JAPAN Bd. 1999, Nr. 03, 31. März 1999 (1999-03-31) -& JP 10 339347 A (UNISIA JECS CORP), 22. Dezember 1998 (1998-12-22)
- PATENT ABSTRACTS OF JAPAN Bd. 018, Nr. 245 (M-1603), 11. Mai 1994 (1994-05-11) -& JP 06 032245 A (TOYOTA MOTOR CORP), 8. Februar 1994 (1994-02-08)
- PATENT ABSTRACTS OF JAPAN Bd. 1998, Nr. 10, 31. August 1998 (1998-08-31) -& JP 10 138724 A (MITSUBISHI MOTORS CORP), 26. Mai 1998 (1998-05-26)
- PATENT ABSTRACTS OF JAPAN Bd. 2000, Nr. 09, 13. Oktober 2000 (2000-10-13) -& JP 2000 154842 A (KAYABA IND CO LTD), 6. Juni 2000 (2000-06-06)
- PATENT ABSTRACTS OF JAPAN Bd. 1999, Nr. 11, 30. September 1999 (1999-09-30) & JP 11 148529 A (KAYABA IND CO LTD), 2. Juni 1999 (1999-06-02)

## Beschreibung

### Technisches Gebiet

Die Erfindung betrifft eine Zylinderbaugruppe mit einem Achsanschluss gemäß dem Oberbegriff von Patentanspruch 1.

### Stand der Technik

Die DE 37 35 043 C2 beschreibt einen Schwingungsdämpfer mit einem Achsanschluss, der von einem äußeren Schellenteil und einem zwischen parallel verlaufenden Befestigungslaschen angeordneten u-förmigen Innenbügel gebildet wird. Zumindest das äußere Schellenteil ist an einem Zylinder des Schwingungsdämpfers verschweißt. Der Innenbügel und die Laschen verfügen über deckungsgleiche Durchgangsöffnungen für Befestigungsmittel. Ein Achsteil des Fahrwerks, z. B. der Radträger wird in den Innenbügel eingeschoben und durch die querverlaufenden Befestigungsmittel, die sich außenseitig an den Laschen abstützen, axial und in Umfangsrichtung gesichert.

Eine ebenfalls weit verbreitete Befestigung eines Achsteils an einem Schwingungsdämpfer offenbart die G 86 09 696 U1. An dem Zylinder des Schwingungsdämpfers ist ein in Längsrichtung des Schwingungsdämpfers - verlaufender Befestigungssteg geschweißt. Das Achsteil verfügt über einen geschlitzten Anschlussring, der auf den Zylinder aufgeschoben ist, wobei der Befestigungssteg in den Schlitz des Anschlussrings eingreift. Die Schlitzbreite ist unter allen Umständen größer als die Materialstärke des Befestigungsstegs. Mindestens eine querverlaufende Spannschraube sorgt für eine Klemmverbindung zwischen dem Zylinder und dem Anschlussring, wobei der Befestigungssteg die Funktion einer Lageorientierung und einer axialen Zugsicherung für den Anschlussring übernimmt. Der Befestigungssteg ist als ein Blechstreifen vergleichsweise dünn ausgeführt, da die Belastung direkt in den Zylinder eingeleitet wird. Häufig handelt es sich bei dem Anschlussring um ein vergleichsweise teueres und schweres Gussteil.

Aus der DE 39 32 329 A1 ist eine Zylinderbaugruppe, insbesondere für einen Schwingungsdämpfer, mit einem radialen Achsanschluss bekannt. Ein Achsteil umgreift außenseitig zumindest teilweise den Achsanschluss und weist beabstandete Befestigungsflächen auf, auf denen das Achsteil anliegt. Die Befestigungslaschen sind über einen dem Außendurchmesser des Schwingungsdämpfers angepassten Befestigungsbügel miteinander verbunden.

Der Achsanschluss nach der EP 0476 833 A1 entspricht in der Grundkonstruktion der Bauweise nach der DE 37 35 043 C2. Zusätzlich ist zwischen den Befestigungslaschen ein Verbindungsblech angeordnet. Das Achsteil greift in den Raum zwischen den beiden Befestigungslaschen ein.

Die JP 06 032245 A beschreibt einen Achsanschluss, der von einem massiven Gussteil gebildet wird, das zwei quer zur Längsachse verlaufende rippenähnliche Vorsprünge aufweist. Ein u-förmiger Achskörper umgreift außenseitig die Vorsprünge, die Durchgangsbohrungen für Befestigungsschrauben zur Fixierung des Achskörpers am Achsanschluss aufweisen.

Einen Achsanschluss mit zwei radialen Rohrkörpern mit Öffnungen für Befestigungsschrauben des Achskörpers ist aus der US 4 223 903 bekannt.

Die JP 10 138 724 A offenbart einen Schwingungsdämpfer mit einem Achsanschluss, der über einen Rohrkörper in Verbindung mit radialen Befestigungslaschen einen Achskörper trägt. Der Achskörper umgreift außenseitig die Befestigungslaschen.

Aufgabe der vorliegenden Erfindung ist es, einen alternativen Achsanschluss für eine Fahrwerkskomponente an einem Schwingungsdämpfer zu realisieren.

Erfindungsgemäß wird die Aufgabe dadurch gelöst, dass der Achsanschluss beabstandete Befestigungsflächen aufweist, auf denen das Achsteil anliegt.

### Darstellung der Erfindung

Die beabstandeten Befestigungsflächen bieten die Möglichkeit, dass der Achsanschluss größere Kräfte übernehmen kann, da genügend Flächen z. B. für Schweißnähte vorliegen.

Bei einer ersten Ausführungsform sind die Befestigungsflächen auf Befestigungslaschen angeordnet. Als eine Maßnahme zur Festigkeitssteigerung ist vorgesehen, dass die Befestigungslaschen Bestandteil eines u-förmigen Achsanschlusses sind. Ein Verbindungssteg zwischen den Befestigungslaschen des u-förmigen Achsanschlusses ist mit einem radialen Abstand zum Zylinder angeordnet. Dadurch wird verhindert, dass Befestigungsmittel, die die Befestigungslaschen verspannen, diese dabei überlasten.

Eine weitere oder alternative Maßnahme kann darin bestehen, dass der Achsanschluss eine zwischen den Befestigungslaschen angeordnete Verstärkungsplatte aufweist. Auch die Verstärkungsplatte hält den Abstand zwischen den Befestigungslaschen unter allen Umständen ein.

Man kann auch vorsehen, dass die Befestigungslaschen stirnseitig mindestens eine Querstrebe aufweisen. Durch zusätzliche Verbindungen zwischen den Befestigungslaschen entsteht ein deutlich verfestigter Achsanschluss.

Um eine möglichst großflächige Anbindung des Achsanschlusses an den Zylinder zu erreichen, ist mindestens eine der Befestigungslaschen über einen Trägersteg mit dem Zylinder verbunden. Der Trägersteg bietet günstige Vorraussetzungen für Schweißnähte zum Zylinder.

Zur besseren Abstützung der auftretenden Kräfte ist der Konturenverlauf des mindestens einen Trägerstegs der Außenkontur des Zylinders angepasst.

Im Sinne einer großen Gestaltfestigkeit ist der Trägersteg endseitig mit einem Versteifungskragen versehen.

Damit die Schweißnaht zwischen dem Trägersteg und dem Zylinder bei der Verwendung mehrerer Befestigungsmittel günstig belastet wird, weist der Trägersteg randseitig eine segmentierte Schweißnahtkontaktfläche zum Zylinder auf.

### Kurze Beschreibung der Zeichnungen

Anhand der folgenden Figurenbeschreibung soll die Erfindung näher erläutert werden.

Es zeigt:

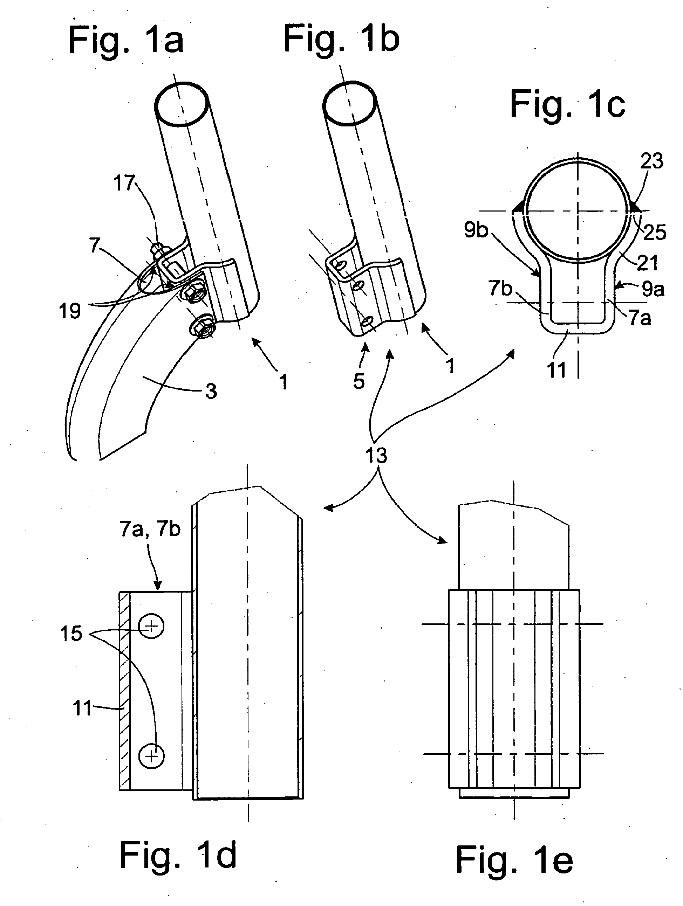

- Fig. 1a - 2e: u-förmiger Achsanschluss

Die Figurengruppe Fig. 1a bis 1e zeigen vereinfacht eine Zylinderbaugruppe 1, wie sie z. B. bei einem Schwingungsdämpfer eingesetzt wird. Die Zylinderbaugruppe 1 ist mit einem Achsteil 3, z. B. einem Radträger verbunden und weist einen radialen Achsanschluss 5 auf, der von dem Achsteil außenseitig zumindest teilweise umgriffen wird. Dafür verfügt das Achsteil 3 über einen Hohlraum 7 zur Aufnahme des Achsanschlusses 5.

In dieser Ausführungsform besteht der Achsanschluss 5 aus radial zum Zylinder ausgerichteten Befestigungslaschen 7a, 7b, auf denen beabstandete Befestigungsflächen 9a, 9b für das Achsteil 3 angeordnet sind. Die Befestigungslaschen 7a, 7b bilden zusammen mit einem Quersteg einen u-förmigen Achsanschluss 5, wobei ein Quersteg 11 in einem Abstand zu dem Zylinder 13 angeordnet ist. Beide Befestigungslaschen 7a, 7b verfügen über deckungsgleiche Durchgangsöffnungen 15 für Befestigungsmittel 17, die in diesem und in den folgenden Ausführungsbeispielen von Spannschrauben gebildet werden. Alternativ sind auch andere bekannte Befestigungsmittel wie z. B. Nietverbindungen denkbar. Die Befestigungsmittel 17 spannen Anschlussflächen 19 des Achsteils 3 auf die Befestigungsflächen 9a, 9b des Achsanschlusses 5 vor.

Mindestens eine Befestigungslasche 7a, 7b ist über einen Trägersteg 21 mit dem Zylinder 13 verbunden, wobei der Konturenverlauf des mindestens einen Trägerstegs 21 der Außenkontur des Zylinders angepasst ist. Schweißnähte 23 an kantenseitigen Schweißnahtkontaktflächen 25 des Trägerstegs 21 sorgen für eine Kraftübertragung von dem Achsanschluss 5 auf den Zylinder 13.

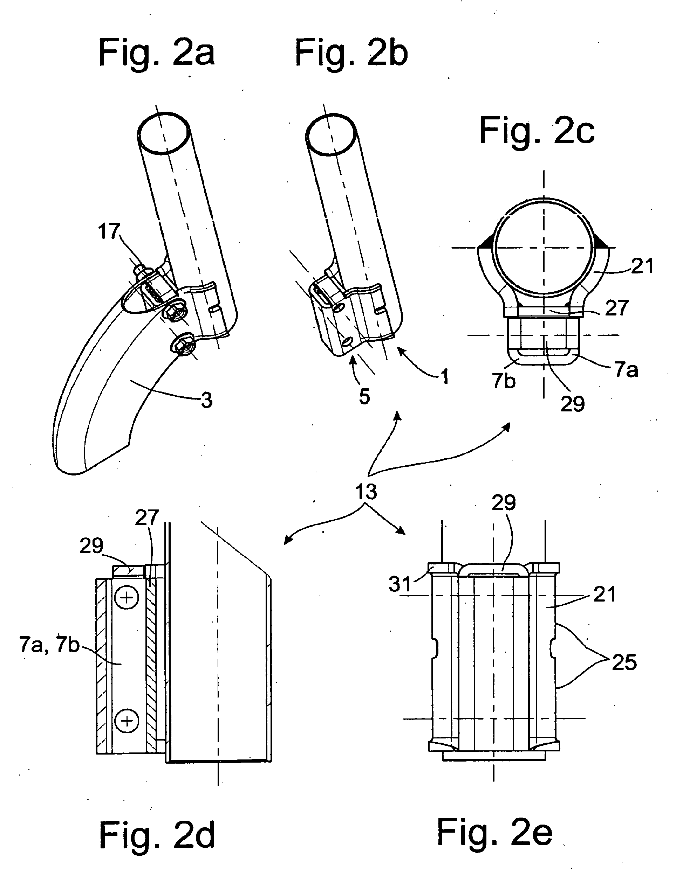

Die Figurengruppe 2a bis 2e zeigt einen Achsanschluss 5 gemäß der Figurengruppe 1a bis 1e, bei dem verschiedene festigkeitssteigernde Maßnahmen durchgeführt wurden, die unabhängig voneinander einsetzbar sind. So ist insbesondere in den Figuren 2c und 2d eine Verstärkungsplatte 27 erkennbar, die zwischen den Befestigungslaschen 7a, 7b tangential zum Zylinder 13 eingeschweißt ist. Die Verstärkungsplatte 27 verhindert zusätzlich eine Abstandsverkürzung der Befestigungslaschen 7a, 7b aufgrund der Vorspannung innerhalb der Befestigungsmittel 17. Des weiteren verfügt der Achsanschluss über mindestens eine stirnseitige Querstrebe 29 zwischen den Befestigungslaschen 7a, 7b. In diesem Fall wird die Querstrebe 29 von einer stirnseitigen Verlängerung einer Befestigungslasche 7a, 7b gebildet, die in Richtung der anderen Befestigungslaschen gebogen und mit dieser verschweißt ist.

Die Fig. 2e zeigt, dass der Trägersteg 21 mit einem Versteifungskragen 31 versehen ist, der zusätzlich die Gestaltfestigkeit des Achsanschlusses 5 erhöht. Im Bereich der Schweißnaht 23 zum Zylinder 13 ist der Trägersteg randseitig mit einer segmentierten Scheißnahtkontaktfläche 25 versehen. Damit wird die Krafteinleitung von den Befestigungsmitteln 17 in den Zylinder 13 spannungsärmer gestaltet.

## Patentansprüche

1. Zylinderbaugruppe, insbesondere für einen Schwingungsdämpfer, mit einem radialen Achsanschluss, wobei ein Achsteil außenseitig zumindest teilweise den Achsanschluss umgreift, und der Achsanschluss (5) beabstandete Befestigungsflächen (9a, 9b) aufweist, auf denen das Achsteil (3) anliegt,
wobei die Befestigungsflächen (9a, 9b) auf Befestigungslaschen (7a, 7b) angeordnet sind,
**dadurch gekennzeichnet, dass** die Befestigungslaschen (7a, 7b) Bestandteil eines u-förmigen Achsanschlusses (5) sind
und ein Verbindungssteg (11) zwischen den Befestigungslaschen (7a, 7b) des u-förmigen Achsanschlusses (5) mit einem radialen Abstand zum Zylinder (13) angeordnet ist.

2. Zylinderbaugruppe nach Anspruch 1,
**dadurch gekennzeichnet,**
**dass** der Achsanschluss (5) eine zwischen den Befestigungslaschen (7a, 7b) angeordnete Verstärkungsplatte (27) aufweist.

3. Zylinderbaugruppe nach Anspruch 1,
**dadurch gekennzeichnet,**
**dass** die Befestigungslaschen (7a, 7b) stirnseitig mindestens eine Querstrebe (29) aufweisen.

4. Zylinderbaugruppe nach Anspruch 1,
**dadurch gekennzeichnet,**
**dass** mindestens eine der Befestigungslaschen (7a, 7b) über einen Trägersteg (21) mit dem Zylinder (13) verbunden ist.

5. Zylinderbaugruppe nach Anspruch 4,
**dadurch gekennzeichnet,**
**dass** der Konturenverlauf des mindestens einen Trägerstegs (21) der Außenkontur des Zylinders (13) angepasst ist.

6. Zylinderbaugruppe nach Anspruch 4,
**dadurch gekennzeichnet,**
**dass** der Trägersteg (21) endseitig mit einem Versteifungskragen (29) versehen ist.

7. Zylinderbaugruppe nach Anspruch 4,
**dadurch gekennzeichnet,**
**dass** der Trägersteg (21) randseitig eine segmentierte Schweißnahtkontaktfläche (25) zum Zylinder (13) aufweist.

## Claims

1. Cylinder module, in particular for a vibration damper, with a radial axle connection, an axle part at least partially surrounding the axle connection on the outside, and the axle connection (5) having spaced-apart fastening surfaces (9a, 9b) against which the axle part (3) bears, the fastening surfaces (9a, 9b) being arranged on fastening straps (7a, 7b), **characterized in that** the fastening straps (7a, 7b) are an integral part of a U-shaped axle connection (5), and a connecting web (11) between the fastening straps (7a, 7b) of the U-shaped axle connection (5) is arranged with a radial spacing with respect to the cylinder (13).

2. Cylinder module according to Claim 1, **characterized in that** the axle connection (5) has a reinforcing plate (27) arranged between the fastening straps (7a, 7b).

3. Cylinder module according to Claim 1, **characterized in that** the fastening straps (7a, 7b) have at least one transverse strut (29) on the end face.

4. Cylinder module according to Claim 1, **characterized in that** at least one of the fastening straps (7a, 7b) is connected to the cylinder (13) via a carrier web (21).

5. Cylinder module according to Claim 4, **characterized in that** the contour profile of the at least one carrier web (21) is adapted to the outer contour of the cylinder (13).

6. Cylinder module according to Claim 4, **characterized in that** the carrier web (21) is provided with a stiffening collar (29) on the end face.

7. Cylinder module according to Claim 4, **characterized in that** the carrier web (21) has at the edge a segmented weld-seam contact surface (25) with respect to the cylinder (13).

## Revendications

1. Module cylindrique, notamment pour un amortisseur d'oscillations, comprenant un raccord d'essieu radial, une partie d'essieu venant en prise du côté extérieur au moins en partie autour du raccord d'essieu, et le raccord d'essieu (5) présentant des surfaces de fixation espacées (9a, 9b) sur lesquelles s'applique la partie d'essieu (3),
les surfaces de fixation (9a, 9b) étant disposées sur des pattes de fixation (7a, 7b),
**caractérisé en ce que**
les pattes de fixation (7a, 7b) font partie d'un raccord d'essieu (5) en forme de U,
et une nervure de connexion (11) est disposée à distance radiale du cylindre (13) entre les pattes de fixation (7a, 7b) du raccord d'essieu (5) en forme de U.

2. Module cylindrique selon la revendication 1,
**caractérisé en ce que**
le raccord d'essieu (5) présente une plaque de renforcement (27) disposée entre les pattes de fixation (7a, 7b).

3. Module cylindrique selon la revendication 1,
**caractérisé en ce que**
les pattes de fixation (7a, 7b) présentent, du côté frontal, au moins une traverse (29).

4. Module cylindrique selon la revendication 1,
**caractérisé en ce**
**qu'**au moins l'une des pattes de fixation (7a, 7b) est connectée au cylindre (13) par le biais d'une nervure de support (21).

5. Module cylindrique selon la revendication 4,
**caractérisé en ce que**
l'allure du contour de l'au moins une nervure de support (21) est adaptée au contour extérieur du cylindre (13).

6. Module cylindrique selon la revendication 4,
**caractérisé en ce que**
la nervure de support (21) est pourvue du côté de l'extrémité d'un rebord de renforcement (29).

7. Module cylindrique selon la revendication 4,
**caractérisé en ce que**
la nervure de support (21) présente, du côté du bord, une surface de contact à joint de soudure segmentée (25) vers le cylindre (13).
